Europäisches Patentamt

European Patent Office

Office européen des brevets

(11) Publication number: **0 345 198**
**A1**

## (12) EUROPEAN PATENT APPLICATION

(21) Application number: **89560001.3**

(22) Date of filing: **30.05.89**

(51) Int. Cl.⁴: **B 60 R 25/04**
**F 16 K 35/06**

(30) Priority: **31.05.88 ES 8801711**

(43) Date of publication of application:
**06.12.89 Bulletin 89/49**

(84) Designated Contracting States:
**AT BE CH DE FR GB GR IT LI LU NL SE**

(71) Applicant: **Picon Suarez, Plácido**
**Av. Cid, 61-68**
**E-46018 Valencia (ES)**

**Granados Sanchez, Modesto**
**Av. Cid, 61-68**
**E-46018 Valencia (ES)**

(72) Inventor: **Picon Suarez, Plácido**
**Av. Cid., 61-68**
**E-46018 Valencia (ES)**

(74) Representative: **Sanz-Bermell Martinez, Alejandro**
**Baron de Cárcer, 48**
**E-46001 Valencia (ES)**

(54) **Anti-theft valve for fuel feed pipe.**

(57) The present invention consists of an anti-theft valve for the feed pipe of liquid fuel in vehicles.

It consists of a casing (1) in which there is a ball valve lock (7) which is activated from the outside by means of a latchkey (20) whose locking device is firmly attached to the valve casing (1) by means of riveted pins (21,22). At least one of the joints (11) which bears on the ball of the valve may be regulated for a better fit and ease of turning.

For application as anti-theft device in vehicles.

EP 0 345 198 A1

Bundesdruckerei Berlin

## Description

## ANTI THEFT VALVE FOR FUEL FEED PIPE

The applicants and inventor of the present Patent of Invention declare that it is new and not known and cannot be deduced from the State of the Art.

In this application for Patent of Invention it must be understood that the specific form, the attached drawings and the explanations that are given are practical realizations which should be considered as examples and which convey an understanding of its essence so that all modifications understood in the present application should be considered included in the protection here requested.

The present invention consists of an anti-theft valve for the fuel feed pipe.

The closest precursor of this valve can be found in spanish patent number 8702956 which is the property of the present applicant and which protects an anti-theft device applicable to automobile vehicle hydraulic circuits.

Vehicles are provided with fuel which enables them to circulate with a certain degree of autonomy. Consequently, any unscrupulous person may be able to make use of these vehicles, also producing damages in the same through their neglectful use, with detriment to the holders of the property.

The methods normally used to prevent these thefts act on the steering or on the ignition circuit. This makes them easily vulnerable to the actions of thieves.

The device which is here under discussion aims to prevent the unlawful use of vehicles by shutting off the supply of fuel which feeds them and so preventing the use of the vehicle engine.

Another problem which can arise in ball valves during the fitting stage of the manufacturing process is difficulty in operation of the valve when making the turning movement which opens or closes communication from one side of the valve to the other. Because of this, it is possible that valves manufactured to the same measurements may have a better or worse fit resulting in a greater or lesser degree of difficulty of operation by means of a small key to which undue pressure should not be applied when turning.

This patent includes a fitting device to prevent tightness in the locking spheres guaranteeing a perfect fit and the required smootheness in all components. This eliminates many difficulties in the centre of the locking device, that is the fitting of the sphere, which can therefore have no other solution than that of replacing the whole unit with the cost that this involves, as well as rendering a valve useless.

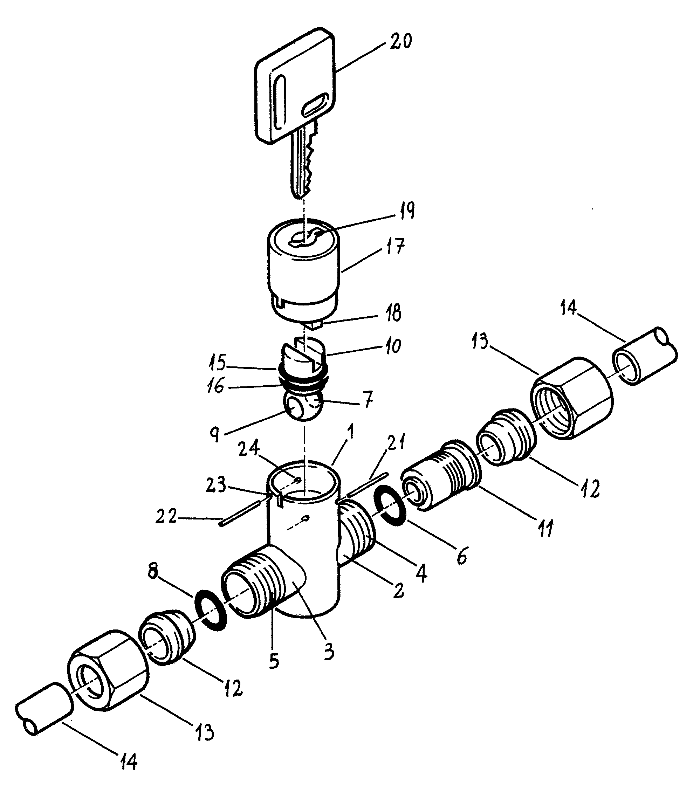

So as to render more clear and intelligible the following explanation, we attach to this report, as part of the same, one page of drawings which in one single figure represent, as an example, the essence of the present invention.

In the abovementioned figure there is an exploded diagram of the valve in which we can see:

(1), the main casing, which has three holes, one in the upper part through which the sphere is operated, and two which are opposite each other and are located in the lower part, indicated by (2) and (3).

The upper part consists of a ball-lock (7), with a hole (9) which, depending on its position will allow or impede free passage through the lower tubes which we shall describe later on. This part has at least one O-ring seal of which two havebeen represented in the drawing indicated with numbers (15) and (16). This part has a slot on its upper part, indicated by (10), which will turn when operated by the lug (18) of part (17).

Part (17) is a bulb lock which has a locking system (19) and may be operated by a key, represented by (20). It is ) fastened to part (1) by means of two notches which ensure its correct relative position and by two pins, marked as (21) and (22), which pass through casing (1) and casing (17) so as to immobilize the lock completely in accordance with the layout of holes (23) and (24).

The ball-lock (7) is contained inside the casing (1), held tightly by washers (6) and (8). The purpose of part (11) is to bear on the ball-lock (7) with sufficient and adequate pressure which can be adjusted so as to eliminate free play and allow the key (20) to be able to turn the part easily.

On the two sides of the tube, shown as (2) and (5), are placed the corresponding connections to attach the pipes (14). This connection is formed on each of the two sides, independently from the pressure adjustment piece (11) of the ball-lock (7) by a tapered bush (12), a nut (13), which is screwed onto the threads (4) and (5) of casing (1) and tube (14) which is held by the aforementioned bush-nut unit.

The washers (6) and (8) may be of any appropriate material which can tolerate wear and contact with hydrocarbon fuels.

Having explained the characteristics of the present invention we specify the protection of the same in the following.

## Claims

1- Anti-theft valve for the fuel feed pipe, characterised by its consisting of a casing which has a ball-valve inside it which allows or interrupts the passage of fuel through the corresponding pipe. The ball-lock is operated by means of a latchkey device which operates the lock, allowing the ball device to turn.

2- Valve, characterized according to the first claim, by having the part which holds the ball-lock fitted by at least one O-ring seal to the valve casing.

3- Valve, characterized according to the first claim, because the sphere fits over two joints attached to the parts which hold the pipes,

4- Valve, characterized according to the claim 3 by having one of the joints which fits over the ball-lock being able to regulate the pressure it exerts on the ball-casing.

5- Valve characterized according to the first claim because the locking device is joined to the part which is integral with the ball by means of a grooved and tongued part.

6- Valve, characterized according to claims one and five, because the locking device is joined to the valve casing by means of riveted pins.

European Patent
Office

**EUROPEAN SEARCH REPORT**

Application Number

EP 89 56 0001

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-3 885 586  (R. B. TIBBETTS) <br> * column 2, lines 22-47; column 4, lines 22-25; column 3, lines 29-60 * | 1-5 | B 60 R 25/04 <br> F 16 K 35/06 |
| Y | --- | 6 | |
| Y | US-A-3 674 046  (J. V. MICELI) <br> * figure 2; column 2, line 66 - column 3, line 3 * <br> --- | 6 | |
| A | GB-A-2 196 413  (L. J. SPOUSE) <br> * lines 21,22; figures * <br> --- | 1,3,5,6 | |
| A | US-A-4 217 925  (B. CLARK) <br> * figures; column 1, line 43 - column 2, line 3 * <br> ----- | 1,3,5 | |

TECHNICAL FIELDS
SEARCHED (Int. Cl.4)

B 60 R
F 16 K

The present search report has been drawn up for all claims

| Place of search | Date of completion of the search | Examiner |
|---|---|---|
| BERLIN | 31-08-1989 | STANDRING M A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)